# EUROPÄISCHE PATENTSCHRIFT

(11) **EP 4 385 750 B1**
(45) Veröffentlichungstag und Bekanntmachung des Hinweises auf die Patenterteilung: **02.07.2025**
(21) Anmeldenummer: 23213730.7
(22) Anmeldetag: 01.12.2023
(51) Int. Cl.: B60B 5/02, B60B 1/00, B60B 21/02, B60B 21/04, B60B 21/10

(54) **FELGE FÜR EIN WENIGSTENS TEILWEISE MUSKELBETRIEBENES FAHRRAD**
RIM FOR A BICYCLE OPERATED AT LEAST PARTIALLY BY MUSCLE
JANTE POUR BICYCLETTE ENTRAÎNÉE AU MOINS PARTIELLEMENT PAR LA FORCE MUSCULAIRE

(30) Priorität: 09.12.2022 DE 102022132808
(43) Veröffentlichungstag der Anmeldung: 19.06.2024
(73) Patentinhaber: DT Swiss AG, 2504 Biel (CH)
(72) Erfinder: Ballard, Jean-Paul Victor, 8800 Thalwil (CH); Henig, Andreas, 2504 Biel (CH); Hugentobler, Simon, 3097 Liebefeld (CH)
(74) Vertreter: BSB Patentanwälte Schütte & Engelen Partnerschaft mbB

(56) Entgegenhaltungen:
- US-A- 5 975 645
- US-A1- 2006 200 989
- US-A1- 2013 113 269
- US-A1- 2016 250 890
- US-A1- 2017 008 337
- US-A1- 2018 361 785
- US-B2- 10 875 356

## Beschreibung

Die Erfindung betrifft eine Felge für ein wenigstens teilweise muskelbetriebenes Fahrrad mit einem Felgenkörper mit gegenüberliegenden Felgenflanken, einem Felgenbett und einem Felgenboden, an dem sich im radial innersten Punkt die Felgenflanken treffen, sowie mit gegenüberliegenden Felgenhörnern. Die Felgenhörner erstrecken sich jeweils von einer der Felgenflanken aus bis zu einem radial äußersten Punkt. Die Felgenhörner bilden zusammen mit den Felgenflanken gegenüberliegende Seitenwände, welche sich vom radial innersten Punkt bis zum radial äußersten Punkt erstrecken.

Bei Rennrädern werden in der Regel möglichst schmale Reifen eingesetzt, um einen geringen Windwiderstand und gute Rolleigenschaften zu erzielen. Entsprechend schmal können daher auch die Felgen ausfallen. Es hat sich jedoch gezeigt, dass es aerodynamische Vorteile bringt, wenn die Felge etwas breiter als der Reifen ausgelegt wird. Daher ist beispielsweise aus der US 10875356 B2 eine Rennradfelge bekannt, deren maximale Breite im Bereich der Felgenflanke und somit unterhalb der Felgenhörner liegt.

Im Rahmen von Untersuchungen hat sich dieses Konzept jedoch als problematisch erwiesen, wenn es auf Felgen übertragen wird, welche mit breiteren Reifen bestückt werden sollen. Solche Felgen werden z. B. für Gravelbikes oder bei Rennrädern für Querfeldeinrennen (Cyclocrossräder bzw. Radcrossräder) benötigt. Bei diesen Fahrrädern müssen die Felgen mit breiteren Reifen bestückt werden, damit auch auf Schotter- und unbefestigten Wegen sicher gefahren werden kann.

Aufgrund der breiteren Reifen müssen zwangsläufig auch die Felgen breiter dimensioniert werden. Wenn dann aber auch noch die aerodynamischen Eigenschaften der oben erwähnten Rennradfelgen mit der breitesten Stelle unterhalb der Felgenhörner verwirklicht werden sollen, ergibt sich ein Zielkonflikt. Insgesamt werden die Felgen dann sehr schwer und derart breit, dass sie nicht mehr optimal mit dem Rennrad und dessen aerodynamischen Komponenten (Rahmen, Gabel etc.) zusammenwirken können. Mit anderen Worten, die an sich bewährten Rennradfelgen können nicht durch einfaches Hochskalieren in Felgen für Querfeldeinrennen umgewandelt werden.

Es ist daher die Aufgabe der vorliegenden Erfindung, eine verbesserte Felge für Querfeldeinrennen zur Verfügung zu stellen, welche den zuvor diskutierten Überlegungen möglichst weitgehend gerecht wird. Insbesondere soll die Felge ein möglichst geringes Gewicht und möglichst gute aerodynamische Eigenschaften aufweisen.

Diese Aufgabe wird gelöst durch eine Felge mit den Merkmalen des Anspruchs 1. Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Felge ist für ein wenigstens teilweise muskelbetriebenes Fahrrad und insbesondere für ein Sportfahrrad für Querfeldeinrennen (z. B. Gravelbikes, Cyclocrossräder) vorgesehen. Soweit technisch sinnvoll, kann die Felge auch bei anderen Typen von Fahrrädern vorteilhaft verwendet werden. Die Felge umfasst wenigstens einen Felgenkörper mit gegenüberliegenden Felgenflanken und mit einem Felgenbett und mit einem Felgenboden. An dem Felgenboden treffen sich im radial innersten Punkt die Felgenflanken. Der Felgenboden dient insbesondere zur Verankerung von Speichen. Der Felgenkörper umfasst gegenüberliegende Felgenhörner, welche sich jeweils von einer der Felgenflanken aus bis zu einem radial äußersten Punkt erstrecken. Insbesondere bilden die Felgenhörner zusammen mit den Felgenflanken gegenüberliegende Seitenwände, welche sich vom radial innersten Punkt bis zum radial äußersten Punkt erstrecken. Eine breiteste Stelle des Felgenkörpers liegt unterhalb des Felgenbetts und oberhalb einer horizontalen Mittellinie. Dabei ist die Breite an der breitesten Stelle (die sogenannte maximale Breite) wenigstens um ein Viertel und vorzugsweise wenigstens um ein Drittel größer als eine lichte Maulweite zwischen den Felgenhörnern. Dabei weisen die Seitenwände jeweils einen (durchgehenden) definierten Krümmungsverlauf mit wenigstens einer (ersten) Wendestelle auf. Die Wendestelle ist zwischen dem radial äußersten Punkt und der breitesten Stelle angeordnet. Die Wendestelle liegt außerhalb des Felgenhorns. An der Wendestelle erfolgt ein Wechsel von einer (ersten) konkaven Krümmung in eine (erste) konvexe Krümmung. Die konvexe Krümmung liegt zwischen der Wendestelle und der breitesten Stelle. Die konkave Krümmung liegt zwischen der Wendestelle und dem radial äußersten Punkt. Insbesondere ergibt sich dadurch, dass die Seitenwände zwischen dem radial äußersten Punkt und der Wendestelle wenigstens abschnittsweise konkav gekrümmt und zwischen der Wendestelle und der breitesten Stelle wenigstens abschnittsweise konvex gekrümmt sind.

Die vorliegende Erfindung bietet viele Vorteile. Einen erheblichen Vorteil bieten die besonderen Krümmungsverläufe der Seitenwände. Durch diese Krümmungsverläufe kann der zuvor diskutierte Zielkonflikt zwischen einer leichten und aerodynamischen Rennradfelge und einer Felge für den Einsatz mit breiteren Reifen für Querfeldeinrennen optimal gelöst werden. Mit den Krümmungsverläufen können auch große Unterschiede zwischen der Breite im Bereich der Felgenhörner und der Breite an der breitesten Stelle überwunden werden, ohne dass es zu ungünstigen Materialanhäufungen oder aerodynamischen Problemzonen kommt.

Beispielsweise kann die erfindungsgemäße Felge mit einer eher schmalen, aber dennoch für Querfeldeinreifen ausreichend breiten Maulweite ausgestattet werden. Zugleich kann die breiteste Stelle derart breit ausgeführt werden, dass damit auch die entsprechend breiten Querfeldeinreifen nicht über die breiteste Stelle hinausragen. Dadurch ergibt sich eine sehr große Breitendifferenz zwischen der Maulweite und der breitesten Stelle. Diese kann durch die hier vorgestellten Krümmungsverläufe optimal überwunden werden.

Es ist vorteilhaft und bevorzugt, dass die Seitenwände zwischen dem radial äußersten Punkt und der breitesten Stelle jeweils eine Querschnittsgeometrie mit einer S-förmigen Außenseite aufweisen. Das ermöglicht eine besonders günstige Überwindung der Breitendifferenz zwischen der breitesten Stelle und einer entsprechend schmalen Maulweite. Es ist möglich, dass die Seitenwand zwischen dem radial äußersten Punkt und der breitesten Stelle insgesamt (also zusammen mit ihrer Außenseite und Innenseite) eine S-förmige Querschnittsgeometrie aufweist. Insbesondere weisen die Seitenwände jeweils den gleichen (spiegelverkehrten) Krümmungsverlauf auf. Insbesondere weisen die Seitenwände die gleiche (spiegelverkehrte) Querschnittsgeometrie auf. Insbesondere sind die Seitenwände gleichartig ausgebildet.

Vorzugsweise liegt die breiteste Stelle näher zum Felgenhorn als zur horizontalen Mittellinie. Insbesondere liegt die breiteste Stelle näher zum Felgenbett als zur horizontalen Mittellinie.

Insbesondere liegt die breiteste Stelle bei wenigstens 60 % und vorzugsweise bei wenigstens 65 % der Höhe des Felgenkörpers. Insbesondere liegt die breiteste Stelle bei wenigstens 65 % der Höhe +/- 3 mm. Besonders bevorzugt liegt die breiteste Stelle bei 70 % +/- 2 mm und insbesondere bei 70 % der Höhe. Eine solche Positionierung der breitesten Stelle hat vorteilhafte aerodynamische Auswirkungen. Beispielsweise liegt die breiteste Stelle bei 35 mm Höhe, wenn der Felgenkörper eine Höhe von insgesamt 50 mm aufweist.

Die maximale Breite beträgt insbesondere wenigstens das 1,4-fache und vorzugsweise wenigstens das 1,5-fache der lichten Maulweite. Insbesondere beträgt die lichte Maulweite maximal zwei Drittel der maximalen Breite. Die maximale Breite beträgt insbesondere wenigstens 32 mm und vorzugsweise wenigstens 34 mm und besonders bevorzugt wenigstens 36 mm. Insbesondere beträgt die maximale Breite 36 mm +/- 2 mm und insbesondere 36 +/- 1 mm. Beispielsweise beträgt die maximale Breite 36,5 mm bei einer lichten Maulweite von 24 mm. Das bringt erhebliche aerodynamische Vorteile auch bei der Verwendung von entsprechend breiten Reifen für Querfeldeinrennen.

Die lichte Maulweite beträgt insbesondere weniger als 32 mm und vorzugsweise weniger als 28 mm und insbesondere weniger als 26 mm. Insbesondere beträgt die lichte Maulweite mehr als 18 mm und vorzugsweise mehr als 22 mm. Besonders bevorzugt beträgt die lichte Maulweite 24 mm +/- 2 mm und insbesondere 24 +/- 1 mm. Zum Beispiel beträgt die lichte Maulweite 24 mm. Solche Maulweiten ermöglichen einerseits den Einsatz von breiteren Reifen und erlauben zugleich leichte und windschnittige Konstruktion der Felge im Bereich der Felgenhörner. Die dadurch notwendige Breitendifferenz wird durch die Krümmungsverläufe vorteilhaft überwunden.

Es ist bevorzugt, dass die maximale Breite um wenigstens 8 mm und vorzugsweise um wenigstens 10 mm größer als die lichte Maulweite ist. Besonders bevorzugt ist die maximale Breite um wenigstens 12 mm größer als die lichte Maulweite.

Die konkave Krümmung verläuft vorzugsweise von der Wendestelle aus durchgehend bis auf das Felgenhorn. Insbesondere endet die konkave Krümmung auf dem Felgenhorn beabstandet (mit einem Abstand) zum radial äußersten Punkt. Insbesondere verläuft die konkave Krümmung nur auf einem Teilabschnitt des Felgenhorns. Insbesondere ist der Teilabschnitt vom radial äußersten Punkt beabstandet. Insbesondere endet die konkave Krümmung an einer weiteren Wendestelle auf dem Felgenhorn (wie sie insbesondere nachfolgend noch beschrieben wird). Insbesondere verläuft die konkave Krümmung sowohl oberhalb des Felgenbetts als auch unterhalb des Felgenbetts auf dem Felgenhorn. Insbesondere ist die konkave Krümmung näher am Felgenhorn als die konvexe Krümmung.

Insbesondere verläuft die konvexe Krümmung von der Wendestelle aus durchgehend bis zur breitesten Stelle. Insbesondere verläuft die konvexe Krümmung nur auf der Felgenflanke und nicht auf dem Felgenhorn. Es ist möglich, dass auf dem Felgenhorn eine weitere konvexe Krümmung ausgebildet ist (insbesondere wie sie nachfolgend beschrieben wird). Insbesondere verläuft die konvexe Krümmung nur unterhalb des Felgenbetts. Mit anderen Worten, die konvexe Krümmung liegt tiefer als das Felgenbett (bezogen auf die Höhe des Felgenkörpers). Insbesondere ist die konvexe Krümmung näher an der breitesten Stelle als die konkave Krümmung.

Es ist bevorzugt und vorteilhaft, dass die Breite des Felgenkörpers auch entlang der konkaven Krümmung (insgesamt) zunimmt. Dadurch kann die Seitenwand schmal und gewichtsoptimiert ausfallen. Zugleich trägt die konkave Krümmung dazu bei, dass eine im Vergleich zur Maulweite sehr große und zugleich sehr weit radial außen liegende maximale Breite möglich ist.

In einer vorteilhaften Ausgestaltung ist vorgesehen, dass wenigstens 65 % und insbesondere wenigstens 70 % und vorzugsweise wenigstens 75 % (bzw. drei Viertel) der Zunahme der Breite, welche entlang der konkaven Krümmung und der konvexen Krümmung insgesamt erfolgt, über maximal 25 % (bzw. ein Viertel) der Höhe des Felgenkörpers und zugleich außerhalb des Felgenhorns und/oder unterhalb des Felgenbetts erzielt wird. Insbesondere erfolgt die zuvor definierte Zunahme der Breite über maximal 22 % und besonders bevorzugt maximal 20 % der Höhe des Felgenkörpers. Anders ausgedrückt, fast die gesamte Zunahme der Breite entlang der konkaven und konvexen Krümmung erfolgt über eine sehr kleine Höhendifferenz (bzw. kurze Strecke) außerhalb des Felgenhorns.

Beispielsweise nimmt die Breite entlang der konkaven und der konvexen Krümmung insgesamt um wenigstens 6 mm zu (die Zunahme von beiden Seitenwänden in Summe). Dabei nimmt die Breite außerhalb des Felgenhorns und unterhalb des Felgenbetts beispielsweise um wenigstens 4,5 mm zu. Diese Zunahme von 4,5 mm erstreckt sich beispielsweise über eine Höhe von maximal einem Viertel (z. B. 9 mm) der Gesamthöhe des Felgenkörpers (z. B. 50 mm).

Insbesondere weist die konvexe Krümmung einen minimalen Radius auf, welcher kleiner als ein minimaler Radius der konkaven Krümmung ist. Insbesondere ist der minimale Radius, welcher zwischen der breitesten Stelle und der Wendestelle auftritt, kleiner als der minimale Radius, welcher zwischen der Wendestelle und dem Ende der konkaven Krümmung bzw. der weiteren Wendestelle auftritt. Insbesondere entspricht der minimale Radius einer maximalen Krümmung. Vorzugsweise ist die maximale Krümmung der konvexen Krümmung größer als die maximale Krümmung der konkaven Krümmung.

Insbesondere liegt der minimale Radius der konkaven Krümmung auf dem Felgenhorn und/oder oberhalb des Felgenbetts. Insbesondere liegt der minimale Radius der konvexen Krümmung näher an der breitesten Stelle als an der Wendestelle. Möglich ist auch, dass der minimale Radius der konvexen Krümmung an der breitesten Stelle liegt.

Die konkave Krümmung besteht insbesondere aus einem Felgenhornkrümmungsabschnitt und aus einem Felgenflankenkrümmungsabschnitt. Insbesondere verläuft der Felgenhornkrümmungsabschnitt entlang des Felgenhorns. Insbesondere verläuft der Felgenflankenkrümmungsabschnitt entlang der Felgenflanke. Es ist bevorzugt und vorteilhaft, dass die Breite des Felgenkörpers entlang des Felgenhornkrümmungsabschnitts weniger zunimmt als entlang des Felgenflankenkrümmungsabschnitts. Dadurch wird trotz kleiner Maulweite und großer maximaler Breite eine ungünstige Materialanhäufung am Felgenhorn und im Bereich des Felgenhorns zuverlässig vermieden werden. Der Felgenhornkrümmungsabschnitt verläuft insbesondere vom Beginn des Felgenhorns bis zur weiteren Wendestelle.

Insbesondere nimmt die Breite des Felgenkörpers entlang des Felgenflankenkrümmungsabschnitts wenigstens um den Faktor 1,2 und vorzugsweise wenigstens um den Faktor 1,3 und besonders bevorzugt wenigstens um den Faktor 1,4 so viel zu, wie entlang des Felgenhornkrümmungsabschnitts. Dadurch kann der Breitenzuwachs gewichtsoptimiert und zugleich statisch unterstützend untergebracht werden. Insbesondere nimmt die Breite des Felgenkörpers entlang des Felgenhornkrümmungsabschnitts um wenigstens 0,55 mm und vorzugsweise um wenigstens 0,60 mm und besonders bevorzugt wenigstens 0,65 mm (pro Seitenwand) zu. Insbesondere nimmt die Breite des Felgenkörpers entlang des Felgenflankenkrümmungsabschnitts um wenigstens 0,90 mm und vorzugsweise um wenigstens 0,95 mm und besonders bevorzugt um wenigstens 1,0 mm (pro Seitenwand) zu.

Insbesondere erfährt die Breite des Felgenkörpers entlang des Felgenflankenkrümmungsabschnitts und der konvexen Krümmung (insgesamt) einen ersten Breitenzuwachs. Insbesondere erfährt die Breite des Felgenkörpers entlang des Felgenhornkrümmungsabschnitts (insgesamt)einen zweiten Breitenzuwachs. Dabei ist bevorzugt, dass der erste Breitenzuwachs wenigstens das Doppelte und vorzugsweise wenigstens das Dreifache und besonderes bevorzugt wenigstens das 3,2-fache des zweiten Breitenzuwachses beträgt. Dabei ist der zweite Breitenzuwachs insbesondere so ausgebildet, wie es zuvor für die Zunahme der Breite entlang des Felgenflankenkrümmungsabschnitts beschrieben wurde. Der erste Breitenzuwachs beträgt insbesondere wenigstens 1,90 mm und vorzugsweise wenigstens 2,10 mm und besonders bevorzugt wenigstens 2,25 mm (pro Seitenwand).

Es ist möglich und vorteilhaft, dass die Gesamtzunahme der Breite entlang der konkaven Krümmung um maximal 20 % und vorzugsweise um maximal 10 % und besonders bevorzugt um maximal 5 % von der Zunahme der Breite entlang der konvexen Krümmung abweicht. Mit anderen Worten, die konkave und die konvexe Krümmung weisen insbesondere einen sehr ähnlichen Breitenzuwachs auf. Dabei ist es ein erheblicher Vorteil der Erfindung, dass der Breitenzuwachs am Felgenhorn nur einen entsprechend geringen Anteil am Breitenzuwachs entlang der konkaven Krümmung darstellt.

Die konkave Krümmung und die konvexe Krümmung weisen vorzugsweise jeweils einen Radius auf, dessen Wert sich über die Strecke des Krümmungsverlaufs verändert. Insbesondere weisen die konkave Krümmung und/oder die konvexe Krümmung einen veränderlichen Radius auf.

In einer vorteilhaften Weiterbildung ist an dem Felgenhorn eine weitere (zweite) Wendestelle angeordnet. Insbesondere liegt die weitere Wendestelle zwischen der (ersten) Wendestelle und dem radial äußersten Punkt. Insbesondere erfolgt an der weiteren Wendestelle ein Wechsel von der (ersten) konkaven Krümmung in eine weitere (zweite) konvexe Krümmung. Die konkave Krümmung verläuft insbesondere von der Wendestelle bis zur weiteren Wendestelle. Insbesondere erstreckt sich die weitere konvexe Krümmung in Richtung des äußersten Punkts. Die weitere konvexe Krümmung weist insbesondere einen konstanten Radius auf.

Möglich und vorteilhaft ist, dass sich die weitere konvexe Krümmung bis zu einem Abschnitt erstreckt, welcher gerade (ohne Krümmung) ausgebildet ist. Der gerade Abschnitt erstreckt sich insbesondere bis zum radial äußersten Punkt oder endet kurz davor. Der gerade Abschnitt verläuft insbesondere in einem Winkel zwischen 0° bis 5° und vorzugsweise zwischen 1° und 3°. Beispielsweise ist ein Winkel von 2° vorgesehen. zur horizontalen Mittellinie. Dabei steigt der gerade Abschnitt insbesondere in Richtung des radial äußersten Punkts an. Möglich ist auch, dass sich die weitere konvexe Krümmung wenigstens bis zum radial äußersten Punkt erstreckt.

Vorzugsweise liegt die weitere Wendestelle unterhalb der engsten Stelle zwischen den Felgenhörnern. Die engste Stelle liegt insbesondere dort, wo die (kleinste) lichte Maulweite ist. Vorzugsweise liegt die weitere Wendestelle mit einer maximalen Abweichung von 10 % und vorzugsweise 8 % und/oder von +/- 1 mm auf der gleichen Position wie die engste Stelle zwischen den Felgenhörnern. Es ist möglich, dass die weitere Wendestelle auf der gleichen Höhenposition wie die engste Stelle liegt.

Es ist bevorzugt und vorteilhaft, dass wenigstens 70 % und vorzugsweise wenigstens 75 % (bzw. drei Viertel) der Zunahme der Breite, welche zwischen der weiteren Wendestelle und der breitesten Stelle des Felgenkörpers insgesamt erfolgt, außerhalb des Felgenhorns und/oder unterhalb des Felgenbetts erzielt wird. Insbesondere werden maximal 30 % und vorzugsweise maximal 25 % (bzw. ein Viertel) der Zunahme der Breite, welche zwischen der weiteren Wendestelle und der breitesten Stelle des Felgenkörpers insgesamt erfolgt, entlang des Felgenhorns und/oder oberhalb des Felgenbetts erzielt.

Insbesondere nimmt die Breite des Felgenkörpers von der weiteren Wendestelle bis zum radial äußersten Punkt ab. Insbesondere nimmt die Breite des Felgenkörpers unterhalb der weiteren Wendestelle bis zur breitesten Stelle zu.

In einer vorteilhaften Weiterbildung ist vorgesehen, dass eine an der weiteren Wendestelle (außen) am Felgenhorn anliegende Tangente einen Winkel von wenigstens 82° und vorzugsweise wenigstens 84° zur horizontalen Mittellinie aufweist. Insbesondere hat die Tangente einen Winkel von maximal 90° zur horizontalen Mittellinie. Das ermöglicht eine entsprechend schlanke und windschnittige Ausführung der Felge im Bereich der Felgenhörner. Zudem wird dadurch eine besonders leichte und materialschonende Ausformung des Felgenkörpers aus einem Formwerkzeug ermöglicht.

Insbesondere ist die Tangente um maximal 8° und vorzugsweise maximal 6° zur vertikalen Achse des Felgenkörpers geneigt. Insbesondere weist die Tangente einen Winkel von mindestens 0° zur vertikalen Achse des Felgenkörpers auf. Insbesondere ist die Tangente nicht mit einem negativen Winkel zur vertikalen Achse des Felgenkörpers geneigt.

Es ist möglich, dass eine Innenseite des Felgenhorns in einem Winkel von wenigstens 85° und vorzugsweise wenigstens 87° zur horizontalen Mittellinie geneigt ist. Insbesondere ist die Innenseite maximal in einem Winkel von 90° zur horizontalen Mittellinie angeordnet. Vorzugsweise beträgt die Winkeldifferenz zwischen Tangente und Innenwand maximal 5° und vorzugsweise maximal 3° +/- 1° und insbesondere 3°. Auch das unterstützt eine materialschonende Ausformung.

In allen Ausgestaltungen ist es bevorzugt, dass der Felgenkörper frei von Bremsflanken und/oder anderen zum Bremsen ausgebildeten Reibflächen ist. Insbesondere sind an den Seitenwänden keine Bremsflanken ausgebildet. Insbesondere sind weder an den Felgenflanken noch an den Felgenhörnern Bremsflanken ausgebildet. Insbesondere ist die Felge zur Verwendung an einem Laufrad mit Scheibenbremsen vorgesehen.

Insbesondere ist der Felgenkörper aus einem Kunststoff und vorzugsweise aus einem Faserverbundwerkstoff gefertigt. Beispielsweise ist ein kohlenstofffaserverstärkter Kunststoff (CFK bzw. "Carbon") vorgesehen. Möglich sind auch andere geeignete Kunststoffe.

Im Rahmen der vorliegenden Erfindung beziehen sich die Angaben zur Krümmung und zu anderen Dimensionierungen der Seitenwand insbesondere auf deren Außenseite. Entsprechende Angaben für die Felgenflanke und für das Felgenhorn beziehen sich insbesondere auf deren jeweilige Außenseite, sofern nicht anders angegeben. Insbesondere sind die konkave und die konvexe Krümmung sowie die weitere konkave Krümmung jeweils durchgehend ausgebildet. Insbesondere entspricht der Kehrwert des Radius an einer definierten Stelle des Krümmungsverlaufs der Krümmung an der definierten Stelle. Angaben zum Radius beziehen sich insbesondere auf dessen Betrag.

Insbesondere liegt an der breitesten Stelle keine G2-Stetigkeit vor. Insbesondere liegt an der breitesten Stelle maximal eine G1-Stetigkeit (sogenannte Tangentenstetigkeit) vor. Insbesondere geht die konvexe Krümmung (insbesondere an der breitesten Stelle) in einen weiteren Krümmungsverlauf über, welcher sich in Richtung des Felgenbodens erstreckt. Insbesondere geht die konvexe Krümmung maximal mit einer G1-Stetigkeit in den weiteren Krümmungsverlauf über. Insbesondere geht konvexe Krümmung nicht mit einer G2-Stetigkeit in den weiteren Krümmungsverlauf über. Insbesondere weisen der Krümmungsverlauf und vorzugsweise die Seitenwände Übergänge auf, welche keine G2-Stetigkeit erfüllen (und auch keine höhere Stetigkeit erfüllen). Insbesondere weisen der Krümmungsverlauf und vorzugsweise die Seitenwände keine durchgehende G2-Stetigkeit auf (und auch keine höhere Stetigkeit).

Die Höhe bezieht sich insbesondere auf den Abstand vom radial innersten Punkt bis zum radial äußersten Punkt in Richtung der vertikalen bzw. radialen Achse. Insbesondere verläuft die Höhe quer zur Breite bzw. quer zur horizontalen Mittellinie. Insbesondere teilt die horizontale Mittellinie den Felgenkörper in zwei gleich hohe Teile. Insbesondere entspricht die lichte Maulweite der lichten Weite bzw. dem Lichtmaß zwischen den Felgenhörnern. Insbesondere wird die Maulweite dort gemessen, wo die engste Stelle zwischen den Felgenhörner liegt. Die lichte Maulweite kann auch als innere Maulweite bezeichnet werden.

Das Felgenhorn beginnt insbesondere dort, wo eine horizontale Ebene des Felgenbetts die Seitenwand schneidet. Insbesondere liegt die Ebene horizontal auf dem Felgenbett und schneidet die Seitenwand dort, wo das Felgenhorn und die Felgenflanke aufeinandertreffen. Bei der Ebene handelt es sich insbesondere um eine gedachte horizontale Ebene, welche durch den oder die höchsten Punkte des Felgenbetts verläuft, welche unterhalb der engsten Stelle zwischen den Felgenhörnern auftreten. Insbesondere liegt die Ebene dort, wo auch der spezifische Felgendurchmesser nach ISO/ETRTO gemessen wird. Die Ebene kann daher auch als radial äußere Begrenzung des Durchmessers nach ISO/ETRTO bezeichnet werden. Insbesondere fängt das Felgenhorn an dem spezifischen Felgendurchmesser nach ISO/ETRTO an und verläuft von dort nach radial außen. Die Ebene entspricht insbesondere der Auflagefläche für den Reifen gemäß ISO/ETRTO für Fahrradfelgen.

Eine solche Ebene entspricht insbesondere einem ebenen (nicht gekrümmten) Abschnitt an der Oberseite des Felgenbetts. Die Ebene muss nicht der realen Oberseite des Felgenbetts entsprechen. Sie kann aber der realen Oberseite des Felgenbetts entsprechen. Insbesondere kann die Ebene auch über einem gekrümmten oder geneigten Felgenbett liegen. Die Ebene verläuft insbesondere horizontal. Die Ebene ist insbesondere dadurch definiert, dass sie durch die Stelle des Felgenbetts verläuft, welche die höchste Erhebung darstellt, welche unterhalb der lichten Maulweite gemessen werden kann. Dabei kann ein Teil des Felgenbetts unterhalb oder oberhalb einer solchen Ebene liegen (z. B. in Form einer konkaven Senke oder einer Krümmung nach oben).

Weitere Vorteile und Merkmale der vorliegenden Erfindung ergeben sich aus den Ausführungsbeispielen, die im Folgenden mit Bezug auf die beiliegenden Figuren erläutert werden.

In den Figuren zeigen:
- Figur 1: eine schematische Darstellung eines Fahrrads mit anmeldungsgemäßen Felgen;
- Figur 2: eine rein schematische Darstellung einer anmeldungsgemäßen Felge in einer quergeschnittenen perspektivischen Ansicht;
- Figur 3: eine rein schematische Darstellung einer anmeldungsgemäßen Felge in einer quergeschnittenen Ansicht;
- Figur 4: die Felge nach Figur 3 mit einem eingezeichneten Krümmungskamm;
- Figur 5: eine schematisierte Detaildarstellung der Felge nach Figur 4; und
- Figur 6: eine schematisierte Detaildarstellung einer anmeldungsgemäßen Felge in einer quergeschnittenen Ansicht.

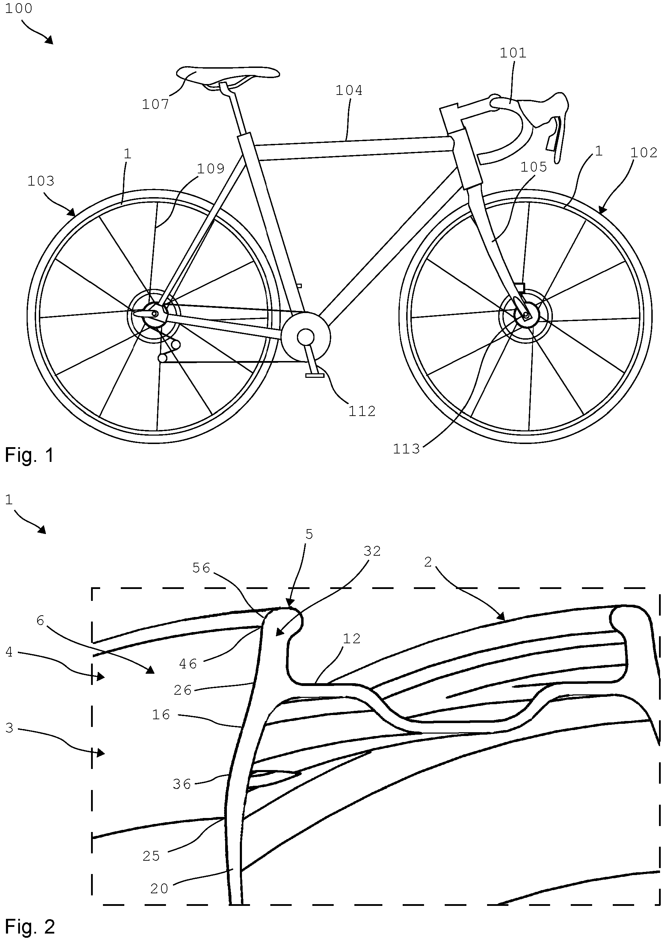

In der Figur 1 ist ein wenigstens teilweise muskelbetriebenes Fahrrad 100 gezeigt, welches hier als Sportfahrrad für Querfeldeinrennen und z. B. als Gravelbike oder Cyclocrossrad ausgebildet ist. Das Fahrrad 100 verfügt über ein Vorderrad 101 und ein Hinterrad 102 mit jeweils einer anmeldungsgemäßen Felge 1 verfügen. Die beiden Laufräder 101, 102 umfassen Speichen 109, um die Felge 1 mit den Naben 110 zu verbinden. An der Felge 1 sind dazu z. B. Speichenlöcher vorgesehen. Damit auch auf Schotter- und unbefestigten Wegen schnell und sicher gefahren werden kann, sind die Felgen 1 hier Reifen 114 bestückt, welche z. B. 30 mm bis 50 mm breit sind.

Das Fahrrad 100 verfügt über einen Rahmen 104, einen Lenker 101 mit Griffen 114, einen Sattel 107, eine Gabel bzw. Federgabel 105. Für Querfeldeinrennen in besonders schwerem Gelände kann ein hier nicht gezeigter Hinterraddämpfer vorgesehen sein. Zum Antrieb dient eine Tretkurbel 112 mit Pedalen. Gegebenenfalls kann ein elektrischer Hilfsantrieb an der Tretkurbel 112 und/oder den Rädern 102, 103 vorgesehen sein. Die Naben der Räder 102, 103 können jeweils über ein Spannsystem 113 (zum Beispiel eine Steckachse oder ein Schnellspanner) an dem Rahmen 104 bzw. der Gabel 105 befestigt sein.

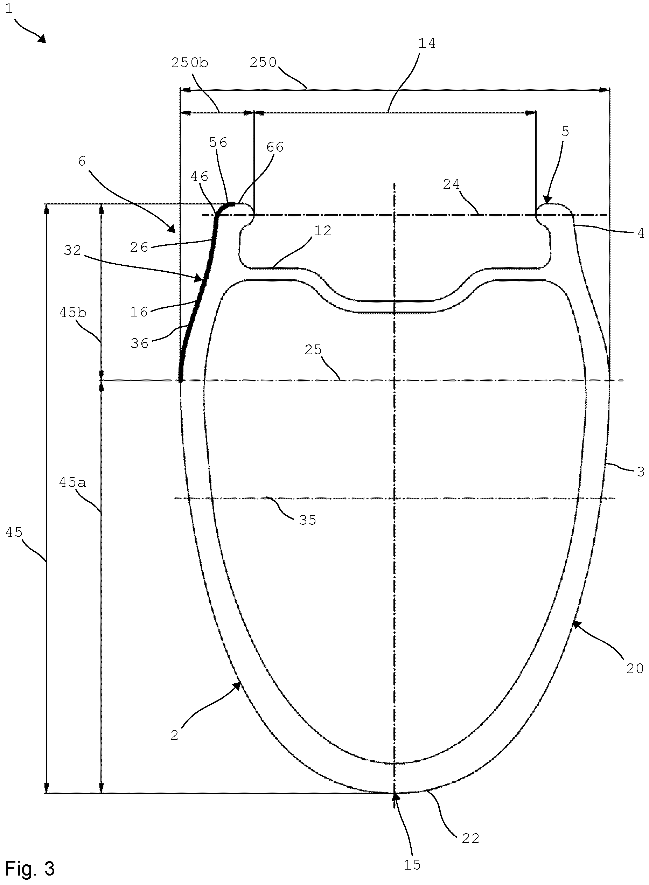

Die an dem Fahrrad 100 eingesetzte Felge 1 wird nun mit Bezug zu den Figuren 2 und 3 näher beschrieben. Die Felge 1 weist einen Felgenkörper 2 auf, welcher gegenüberliegende Felgenflanken 3, ein Felgenbett 12 und einen Felgenboden 22 sowie gegenüberliegende Felgenhörner 4 umfasst. Ergänzend zum Felgenkörper 2 kann die Felge 1 weitere Komponenten aufweisen, beispielsweise Dichtmittel für den Einsatz von Tubeless-Reifen. Der Felgenkörper 2 ist hier ohne Bremsflanken ausgestattet.

Die Felgenflanken 2 treffen sich an einem radial innersten Punkt 15 und verlaufen von dort zu den Felgenhörnern 4. Die Felgenhörner 4 erstrecken sich von den Felgenflanken 3 ausgehend bis zu einem radial äußersten Punkt 5. So ergeben sich gegenüberliegende Seitenwände 20, welche sich vom radial innersten Punkt 15 bis zum radial äußersten Punkt 5 erstrecken. Das Felgenhorn 4 beginnt dort, wo eine horizontale Ebene des Felgenbetts 12 die Seitenwand 20 schneidet. In dem hier gezeigten Beispiel zeigt das Bezugszeichen 12 auf diese Ebene. Diese Ebene entspricht hier auch der Auflagefläche des Reifens und dient zur Größenbestimmung der Felge 1 gemäß ETRTO (European Tyre and Rim Technical Organisation).

Der Felgenboden 22 kann Ausnehmungen aufweisen, an denen Speichen 109 bzw. Nippel befestigt werden können. Das Felgenbett 12 kann Öffnungen aufweisen, durch welche die Speichen 109 bzw. Nippel für Montage- bzw. Servicearbeiten erreicht werden können.

Die lichte Maulweite 14 zwischen den Felgenhörnern 4 ist hier so bemessen, dass die bei Querfeldeinrennen üblichen Reifenbreiten sicher auf der Felge 1 gefahren werden können. Besonders vorteilhaft können beispielsweise Reifen zwischen 30 mm und 40 mm eingesetzt werden. Zur aerodynamischen Optimierung der Felge 1 bzw. der Kombination aus Felge 1 und Querfeldeinreifen ist die lichte Maulweite 14 hier möglichst schmal gewählt und beträgt beispielsweise 24 mm. Die lichte Maulweite 14 wird an der engsten Stelle 24 zwischen den Felgenhörnern 4 gemessen.

Um möglichst gute aerodynamische Eigenschaften zu bieten, befindet sich die breiteste Stelle 25 des Felgenkörpers 2 unterhalb des Felgenbetts 12 und oberhalb einer horizontalen Mittellinie 35. Es hat sich als besonders vorteilhaft erwiesen, wenn die breiteste Stelle 25 bei wenigstens 65 % einer Höhe 45 des Felgenkörpers 2 liegt. Beispielsweise beträgt die Höhe 45 hier 50 mm und die breiteste Stelle 25 liegt auf einer Höhe 45a von 35 mm. Die Differenz 45b beträgt dann 15 mm. In diesem Beispiel liegt die breiteste Stelle 25 dann bei 70 % der Höhe 45 des Felgenkörpers 2.

Damit die Felge 1 auch in Kombination mit den entsprechend breiten Querfeldeinreifen eine optimale Aerodynamik bietet, ist die Breite 250 an der breitesten Stelle 25 hier wenigstens um ein Viertel größer als die lichte Maulweite 14. Vorteilhaft ist zum Beispiel eine Breite 250 von 36,5 mm. Daher ist die maximale Breite 250 hier um 12,5 mm größer als die lichte Maulweite 14. So kann die Felge 1 mit einer großen Bandbreite an Querfeldeinreifen ausgestattet werden, ohne dass die breiteste Stelle 25 im Vergleich zum Reifen zu schmal werden würde. Dadurch kann gewährleistet werden, dass auch Querfeldeinreifen nicht über die breiteste Stelle 25 seitlich hinausragen.

Durch die zuvor beschriebene Dimensionierung ergibt sich allerdings das Problem, dass die Differenz 250b über einen sehr geringen Teil der Höhe 45 (beispielsweise Differenz 45b = 15 mm) überwunden werden muss. Um Materialanhäufungen oder aerodynamisch ungünstige Bereiche zu vermeiden, sind die Seitenwände 20 mit besonderen Krümmungsverläufen 6 ausgestattet. Der Krümmungsverlauf 6 der jeweiligen Seitenwand 20 weist eine Wendestelle 16 auf, an welcher ein Wechsel von einer konkaven Krümmung 26 in eine konvexe Krümmung 36 erfolgt. Durch die Krümmungsverläufe 6 weisen die Seitenwände 20 jeweils eine Querschnittsgeometrie 32 mit einer S-förmigen Außenseite auf.

Die konkave Krümmung 26 verläuft von der Wendestelle 16 bis zu einer am Felgenhorn 4 liegenden weiteren Wendestelle 46. Von der weiteren Wendestelle 46 in Richtung des radial äußersten Punktes 5 schließt sich hier eine weitere konvexe Krümmung 56 an. An ihrem oberen Ende geht die weitere konvexe Krümmung 56 in einen geraden Abschnitt 66 über, welcher sich hier bis zum radial äußersten Punkt 5 erstreckt. Der Krümmungsverlauf 6 und auch die weitere konvexe Krümmung 56 sind in der Figur 3 an der linken Seitenwand 20 durch eine vergrößerte Linienbreite veranschaulicht. Der Krümmungsverlauf 6 mit seiner besonderen Querschnittsgeometrie 32 erstreckt sich von der weiteren Wendestelle 46 nach unten bis zur breitesten Stelle 25.

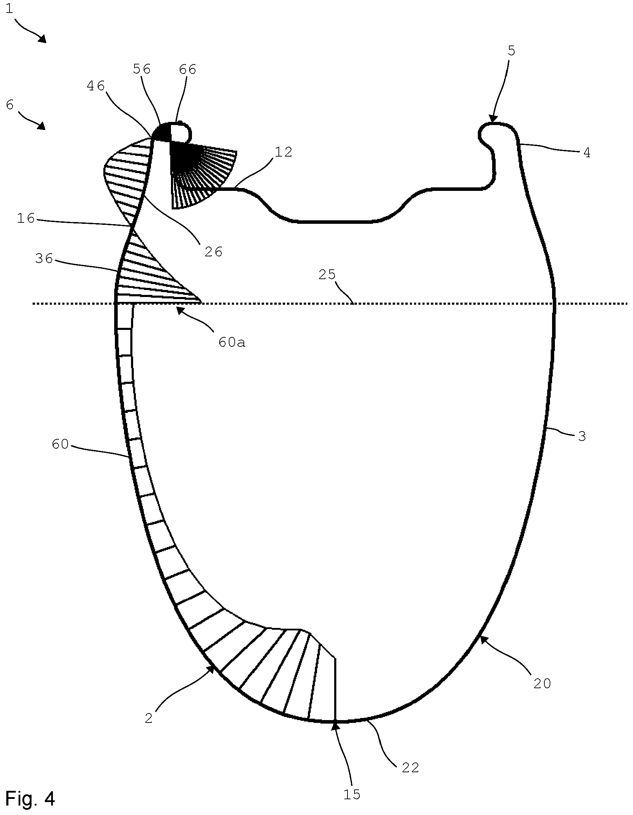

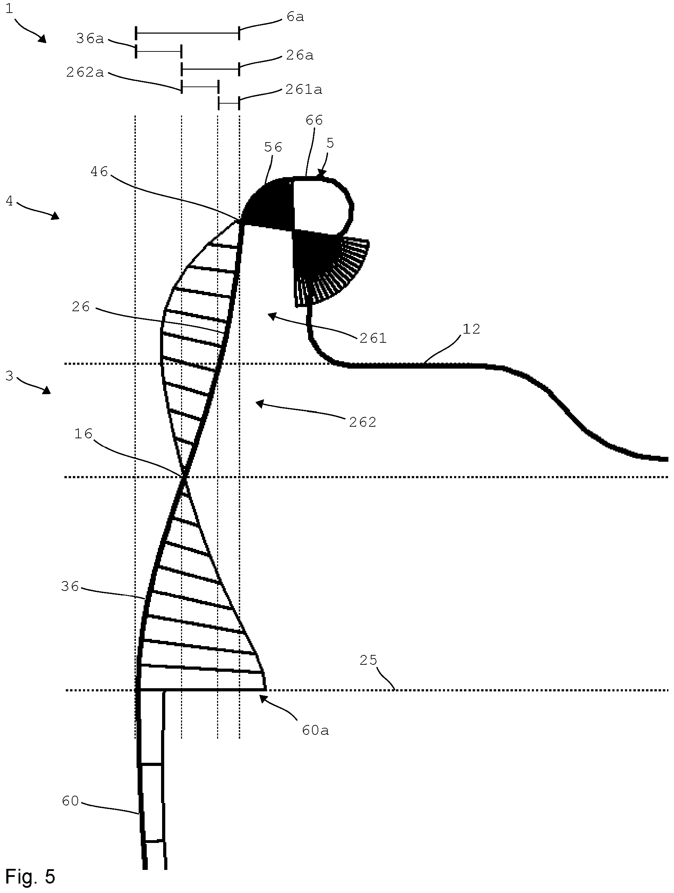

Die Figuren 4 und 5 zeigen eine beispielhafte Felge 1 zur Veranschaulichung des Krümmungsverlaufs 6. Dazu ist in der Figur 4 entlang der linken Seitenwand 20 ein sogenannter Krümmungskamm eingezeichnet. Der Krümmungskamm weist eine Vielzahl von Strahlen auf, deren jeweilige Länge die Krümmung am Ausgangspunkt des Strahls repräsentiert. Je länger die Strahlen sind, desto größer ist die Krümmung. Da die Krümmung dem Kehrwert des zugehörigen Radius entspricht, ist der Radius umso geringer, je länger die Strahlen sind. Zur Verbesserung der Übersichtlichkeit wurden in der Figur 5 die Strahlen des Krümmungskamms im Vergleich zur Figur 4 proportional kürzer dargestellt.

Anhand des Krümmungskamms ist gut zu erkennen, an welcher Position sich die Wendestelle 16, die konkave Krümmung 26 und die konvexe Krümmung 36 sowie die weitere Wendestelle 46 und die weitere konvexe Krümmung 56 befinden. Gut zu erkennen ist auch, dass die weitere konvexe Krümmung 56 einen kontinuierlichen Radius aufweist. Beispielsweise beträgt der Radius 1,5 mm.

Die Krümmungen 26, 36 weisen hingegen einen veränderlichen Radius auf. Beispielsweise hat die konkave Krümmung 26 eine maximale Krümmung mit einem Radius von 22 mm +/-10 %. Beispielsweise hat die konvexe Krümmung 36 eine maximale Krümmung mit einem Radius von 11 mm +/-10 %. Anders ausgedrückt, die konvexe Krümmung 36 hat hier einen minimalen Radius, welcher kleiner als ein minimaler Radius der konkaven Krümmung 26 ist.

Zudem ist die geometrische Stetigkeit des Übergangs von der konvexen Krümmung 36 zu dem darunterliegenden weiteren Krümmungsverlauf 60 der Seitenwand 20 gut zu erkennen. Der Sprung 60a im Krümmungskamm zeigt an, dass hier eine G1-Stetigkeit bzw. eine Tangentenstetigkeit vorliegt. Der weitere Krümmungsverlauf 60 hat im Bereich des Übergangs zu der konvexen Krümmung 36 z. B. eine maximale Krümmung mit einem Radius von 59 mm +/-10 %.

Die konkave Krümmung 26 besteht hier aus einem Felgenhornkrümmungsabschnitt 261 und einem Felgenflankenkrümmungsabschnitt 262 (vgl. Figur 5). Der Felgenhornkrümmungsabschnitt 261 erstreckt sich von der weiteren Wendestelle 46 entlang des Felgenhorns 4 bis zum Felgenbett 12 bzw. zu dessen horizontaler Ebene (gestrichelt eingezeichnet). Dort beginnt der Felgenflankenkrümmungsabschnitt 262 und verläuft bis zur Wendestelle 16.

In der Figur 5 sind gestrichelte vertikale Linien eingezeichnet, welche die Zunahme der Breite entlang der einzelnen Abschnitte des Krümmungsverlaufs 6 veranschaulichen. Dargestellt ist die Zunahme 6a der Breite entlang der konkaven Krümmung 26 und der konvexen Krümmung 36 (also entlang des gesamten Krümmungsverlaufs 6 von der weiteren Wendestelle 46 bis zur breitesten Stelle 25). Dargestellt sind zudem: die Zunahme 26a der Breite entlang der konkaven Krümmung 26, die Zunahme 36a der Breite entlang der konvexen Krümmung 36, die Zunahme 261a der Breite entlang des Felgenhornkrümmungsabschnitts 261, die Zunahme 262a der Breite entlang des Felgenflankenkrümmungsabschnitts 262.

In einer beispielhaften Ausführung der Felge 1 (vorzugsweise der zuvor beschriebenen Felge 1) beträgt die Zunahme 6a 3,055 mm. Davon entfallen 1,353 mm auf die Zunahme 36a und 1,702 mm auf die Zunahme 26a. Die Zunahme 26a besteht aus der Zunahme 262a mit 1,017 mm und der Zunahme 261 A nur 0,68 mm. Entlang des Felgenhornkrümmungsabschnitts 261 nimmt die Breite somit kaum oder nur sehr wenig zu. Erst im darunterliegenden Felgenflankenkrümmungsabschnitt 262 sowie entlang der konvexen Krümmung 36 nimmt die Breite dann sehr zügig zu. Der Breitenzuwachs entlang des Felgenflankenkrümmungsabschnitts 262 und der konvexen Krümmung 36 betragen hier mehr als das Dreifache des Breitenzuwachses entlang des Felgenhornkrümmungsabschnitts 261.

Somit werden mehr als 70 % der Zunahme 6a der Breite, welche zwischen der weiteren Wendestelle 46 und der breitesten Stelle 25 insgesamt erfolgt, außerhalb des Felgenhorns 4 erzielt. Dabei erfolgt die Zunahme 6a der Breite in dem hier gezeigten Beispiel über eine Höhendifferenz von nur 13,7 mm. Von dieser Höhendifferenz liegen 9,5 mm unterhalb des Felgenbetts 12 und außerhalb des Felgenhorns 4. Bei einer Gesamthöhe 45 des Felgenkörpers 2 von 50 mm stellt die Höhendifferenz von 9,5 mm einen Anteil von 19 % bereit. Somit werden hier mehr als 70 % der Zunahme 6a der Breite entlang der konkaven Krümmung 26 und der konvexen Krümmung 36 über gerade einmal 19 % der Höhe 45 des Felgenkörpers 2 und zugleich außerhalb des Felgenhorns 4 erzielt.

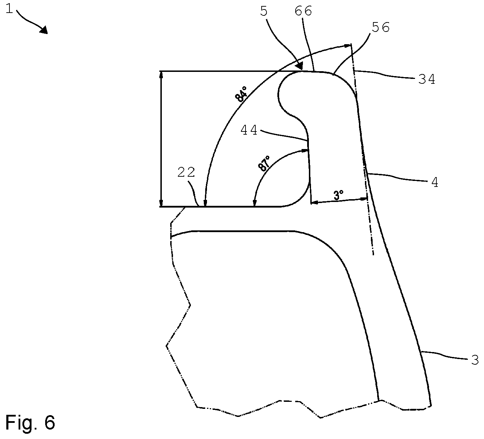

Die Figur 6 zeigt eine beispielhafte Ausführung der Felge 1, bei welcher die Felgenhörner 4 in einem definierten Winkel geneigt sind. Eine an der weiteren Wendestelle 46 anliegende Tangente 34 weist z. B. einen Winkel von 84° zur (hier nicht sichtbaren) horizontalen Mittellinie 35 auf. Zudem ist eine Innenseite 44 des Felgenhorns 4 in einem Winkel von 87° zur horizontalen Mittellinie 35 geneigt. Dadurch ergibt sich ein Anstellungswinkel für das Felgenhorn 4 an seiner Außenseite von 6° und an seiner Innenseite 44 von 3° zur vertikalen Achse.

Solche Anstellungswinkel verbessern den Ausformprozess bei der Herstellung der Felge 1, welche beispielsweise aus einem Faserverbundwerkstoff in einem entsprechenden Formwerkzeug gefertigt wird. Auch dabei bietet der Krümmungsverlauf 6 erhebliche Vorteile, damit der steile Anstellungswinkel nicht in einem Zielkonflikt mit der möglichst nah an den Felgenhörnern 4 liegenden breitesten Stelle 25 steht. Durch die hier vorgestellte Erfindung kann die große Differenz 250b über einen sehr geringen Anteil der Höhe 45 überwunden werden, ohne dass die Felgenhörner 4 geneigt oder mit einer großen Wandstärke ausgeführt werden müssten.

### Bezugszeichenliste:

| | | | |
|---|---|---|---|
| 1 | Felge | 46 | Wendestelle |
| 2 | Felgenkörper | 56 | konvexe Krümmung |
| 3 | Felgenflanke | 60 | Krümmungsverlauf |
| 4 | Felgenhorn | 60a | Sprung |
| 5 | äußerster Punkt | 66 | gerader Abschnitt |
| 6 | Krümmungsverlauf | 100 | Fahrrad |
| 6a | Zunahme | 101 | Lenker |
| 12 | Felgenbett | 102 | Rad, Vorderrad |
| 14 | Maulweite | 103 | Rad, Hinterrad |
| 15 | innerster Punkt | 104 | Rahmen |
| 16 | Wendestelle | 105 | Gabel, Federgabel |
| 20 | Seitenwand | 107 | Sattel |
| 22 | Felgenboden | 109 | Speiche |
| 24 | engste Stelle | 112 | Tretkurbel |
| 25 | breiteste Stelle | 113 | Spannsystem |
| 26 | konkave Krümmung | 114 | Reifen |
| 26a | Zunahme | 250 | Breite |
| 32 | Querschnittsgeometrie | 250b | Differenz |
| 34 | Tangente | 261 | Felgenhornkrümmungsabschnitt |
| 35 | Mittellinie | | |
| 36 | konvexe Krümmung | 261a | Zunahme |
| 36a | Zunahme | 262 | Felgenflankenkrümmungsabschnitt |
| 44 | Innenseite | | |
| 45 | Höhe | 262a | Zunahme |
| 45a | Höhe | | |
| 45b | Differenz | | |

## Patentansprüche

1. Felge (1) für ein wenigstens teilweise muskelbetriebenes Fahrrad (100), umfassend einen Felgenkörper (2) mit gegenüberliegenden Felgenflanken (3), einem Felgenbett (12) und einem Felgenboden (22), an dem sich im radial innersten Punkt (15) die Felgenflanken (2) treffen, und mit gegenüberliegenden Felgenhörnern (4), welche sich jeweils von einer der Felgenflanken (3) aus bis zu einem radial äußersten Punkt (5) erstrecken, sodass die Felgenhörner (4) zusammen mit den Felgenflanken (3) gegenüberliegende Seitenwände (20) bilden, welche sich vom radial innersten Punkt (15) bis zum radial äußersten Punkt (5) erstrecken, wobei die breiteste Stelle (25) des Felgenkörpers (2) unterhalb des Felgenbetts (12) und oberhalb einer horizontalen Mittellinie (35) liegt, **dadurch gekennzeichnet,**
**dass** die Breite (250) an der breitesten Stelle (25) wenigstens um ein Viertel größer als eine lichte Maulweite (14) zwischen den Felgenhörnern (4) ist und dass die Seitenwände (20) jeweils einen definierten Krümmungsverlauf (6) mit wenigstens einer Wendestelle (16) aufweisen, welche zwischen dem radial äußersten Punkt (5) und der breitesten Stelle (25) angeordnet ist und außerhalb des Felgenhorns (4) liegt, und dass an der Wendestelle (16) ein Wechsel von einer konkaven Krümmung (26) in eine konvexe Krümmung (36) erfolgt und dass die konvexe Krümmung (36) zwischen der Wendestelle (16) und der breitesten Stelle (25) liegt und dass die konkave Krümmung (26) zwischen der Wendestelle (16) und dem radial äußersten Punkt (5) liegt.

2. Felge (1) nach dem vorhergehenden Anspruch, wobei die Seitenwände (20) zwischen dem radial äußersten Punkt (5) und der breitesten Stelle (25) jeweils eine Querschnittsgeometrie (32) mit einer S-förmigen Außenseite aufweisen.

3. Felge (1) nach einem der vorhergehenden Ansprüche, wobei die breiteste Stelle (25) näher zum Felgenhorn (4) als zur horizontalen Mittellinie (35) liegt.

4. Felge (1) nach einem der vorhergehenden Ansprüche, wobei die maximale Breite (250) wenigstens das 1,4-fache der lichten Maulweite (14) beträgt und wobei die lichte Maulweite (14) weniger als 32 mm und vorzugsweise weniger als 28 mm beträgt und wobei die maximale Breite (250) um wenigstens 8 mm größer als die lichte Maulweite (14) ist.

5. Felge (1) nach einem der vorhergehenden Ansprüche, wobei die Breite (250) des Felgenkörpers (2) auch entlang der konkaven Krümmung (26) zunimmt.

6. Felge (1) nach einem der vorhergehenden Ansprüche, wobei wenigstens 70% der Zunahme der Breite (250), welche entlang der konkaven Krümmung (26) und der konvexen Krümmung (36) insgesamt erfolgt, über maximal 25 % der Höhe (45) des Felgenkörpers (2) und außerhalb des Felgenhorns (4) erzielt wird.

7. Felge (1) nach einem der vorhergehenden Ansprüche, wobei die konvexe Krümmung (36) einen minimalen Radius aufweist, welcher kleiner als ein minimaler Radius der konkaven Krümmung (26) ist und wobei der minimale Radius der konkaven Krümmung (26) auf dem Felgenhorn (4) liegt.

8. Felge (1) nach einem der vorhergehenden Ansprüche, wobei die konkave Krümmung (26) aus einem Felgenhornkrümmungsabschnitt (261), welcher entlang des Felgenhorns (4) verläuft, und aus einem Felgenflankenkrümmungsabschnitt (262), welcher entlang der Felgenflanke (3) verläuft, besteht und wobei die Breite (250) des Felgenkörpers (2) entlang des Felgenhornkrümmungsabschnitts (261) insgesamt weniger zunimmt als entlang des Felgenflankenkrümmungsabschnitts (262).

9. Felge (1) nach dem vorhergehenden Anspruch, wobei die Breite (250) des Felgenkörpers (2) entlang des Felgenflankenkrümmungsabschnitts (262) und der konvexen Krümmung (36) einen ersten Breitenzuwachs erfährt und wobei die Breite (250) des Felgenkörpers (2) entlang des Felgenhornkrümmungsabschnitts (261) einen zweiten Breitenzuwachs erfährt und wobei der erste Breitenzuwachs wenigstens das Doppelte und vorzugsweise wenigstens das Dreifache des zweiten Breitenzuwachses beträgt.

10. Felge (1) nach einem der vorhergehenden Ansprüche, wobei die Gesamtzunahme der Breite (250) entlang der konkaven Krümmung (26) um maximal 10% und bevorzugt maximal 5% von der Gesamtzunahme der Breite (250) entlang der konvexen Krümmung (36) abweicht.

11. Felge (1) nach einem der vorhergehenden Ansprüche, wobei die konkave Krümmung (26) und die konvexe Krümmung (36) jeweils einen Radius aufweisen, dessen Wert sich über die Strecke des Krümmungsverlaufs (6) verändert.

12. Felge (1) nach einem der vorhergehenden Ansprüche, wobei an dem Felgenhorn (4) eine weitere Wendestelle (46) angeordnet ist und wobei die weitere Wendestelle (46) zwischen der Wendestelle (16) und dem radial äußersten Punkt (5) liegt und wobei an der weiteren Wendestelle (26) ein Wechsel von der konkaven Krümmung (26) in eine weitere konvexe Krümmung (56) erfolgt, welche sich wenigstens bis zum radial äußersten Punkt (5) erstreckt und wobei die weitere Wendestelle (46) unterhalb der engsten Stelle (24) zwischen den Felgenhörnern (4) liegt und/oder wobei die weitere Wendestelle (46) mit einer maximalen Abweichung von 8% auf der gleichen Höhenposition wie die engste Stelle (24) zwischen den Felgenhörnern (4) liegt.

13. Felge (1) nach dem vorhergehenden Anspruch, wobei wenigstens 70% der Zunahme der Breite (250), welche zwischen der weiteren Wendestelle (46) und der breitesten Stelle (25) des Felgenkörpers (2) insgesamt erfolgt, außerhalb des Felgenhorns (4) erzielt wird und/oder wobei die Breite (250) des Felgenkörpers (2) von der weiteren Wendestelle (46) bis zum radial äußersten Punkt (5) abnimmt.

14. Felge (1) nach einem der beiden vorhergehenden Ansprüche, wobei eine an der weiteren Wendestelle (46) am Felgenhorn (4) anliegende Tangente (34) einen Winkel von wenigstens 82° und vorzugsweise wenigstens 84° zur horizontalen Mittellinie (35) aufweist.

15. Felge (1) nach einem der vorhergehenden Ansprüche, wobei eine Innenseite (44) des Felgenhorns (4) in einem Winkel von wenigstens 85° und vorzugsweise wenigstens 87° zur horizontalen Mittellinie (35) geneigt ist.

## Claims

1. A rim (1) for an at least partially muscle-powered bicycle (100), comprising a rim body (2) with opposed rim flanks (3), a rim well (12) and a rim base (22), in which the rim flanks (2) abut in the radially most inwardly point (15), and with opposed rim flanges (4), each extending from one of the rim flanks (3) up to a radially most outwardly point (5), so that the rim flanges (4) together with the rim flanks (3) form opposed side walls (20), which extend from the radially most inwardly point (15) up to the radially most outwardly point (5), wherein the widest spot (25) of the rim body (2) lies beneath the rim well (12) and above a horizontal centerline (35),
**characterized in**
**that** in the widest spot (25) the width (250) is larger by at least one quarter than is a clear rim width (14) between the rim flanges (4), and that the side walls (20) each show a defined curvature shape (6) with at least one inflection point (16), which is disposed between the radially most outwardly point (5) and the widest spot (25) and lies external of the rim flange (4), and that in the inflection point (16), a concave curvature (26) makes a transition to a convex curvature (36), and that the convex curvature (36) lies between the inflection point (16) and the widest spot (25), and that the concave curvature (26) lies between the inflection point (16) and the radially most outwardly point (5).

2. The rim (1) according to the preceding claim, wherein the side walls (20) each comprise a cross-sectional geometry (32) with an S-shaped outside surface between the radially most outwardly point (5) and the widest spot (25).

3. The rim (1) according to any of the preceding claims, wherein the widest spot (25) is closer to the rim flange (4) than to the horizontal centerline (35).

4. The rim (1) according to any of the preceding claims, wherein the maximum width (250) is at least 1.4 times the clear rim width (14), and wherein the clear rim width (14) is less than 32 mm and preferably less than 28 mm, and wherein the maximum width (250) is larger by at least 8 mm than is the clear rim width (14).

5. The rim (1) according to any of the preceding claims, wherein the width (250) of the rim body (2) also increases along the concave curvature (26).

6. The rim (1) according to any of the preceding claims, wherein at least 70% of the width increase (250), which takes place along the concave curvature (26) and the convex curvature (36) on the whole, is achieved over maximally 25% of the height (45) of the rim body (2) and external of the rim flange (4).

7. The rim (1) according to any of the preceding claims, wherein the convex curvature (36) has a minimal radius, which is smaller than the minimal radius of the concave curvature (26), and wherein the minimal radius of the concave curvature (26) lies on the rim flange (4).

8. The rim (1) according to any of the preceding claims, wherein the concave curvature (26) consists of a rim flange curvature section (261) running along the rim flange (4), and of a rim flank curvature section (262) running along the rim flank (3), and wherein the width (250) of the rim body (2) on the whole increases less along the rim flange curvature section (261) than it does along the rim flank curvature section (262).

9. The rim (1) according to the preceding claim, wherein the width (250) of the rim body (2) increases by a first width along the rim flank curvature section (262) and the convex curvature (36), and wherein the width (250) of the rim body (2) increases by a second width along the rim flange curvature section (261), and wherein the first width increase is at least twice, and preferably at least three times, the second width increase.

10. The rim (1) according to any of the preceding claims, wherein the total width increase (250) deviates along the concave curvature (26) by maximally 10% and preferably maximally 5% from the total width increase (250) along the convex curvature (36).

11. The rim (1) according to any of the preceding claims, wherein the concave curvature (26) and the convex curvature (36) each show a radius whose value varies over the length of the curvature shape (6).

12. The rim (1) according to any of the preceding claims, wherein a further inflection point (46) is disposed on the rim flange (4), and wherein the further inflection point (46) lies between the inflection point (16) and the radially most outwardly point (5), and wherein in the further inflection point (26), the concave curvature (26) makes a transition to a further convex curvature (56) which extends at least up to the radially most outwardly point (5), and wherein the further inflection point (46) lies beneath the closest place (24) between the rim flanges (4), and/or wherein the further inflection point (46), showing a maximal deviation of 8 %, lies in the same height position as does the closest place (24) between the rim flanges (4).

13. The rim (1) according to the preceding claim, wherein at least 70% of the width increase (250) taking place between the further inflection point (46) and the widest spot (25) of the rim body (2) on the whole, is achieved external of the rim flange (4), and/or wherein the width (250) of the rim body (2) decreases from the further inflection point (46) up to the radially most outwardly point (5).

14. The rim (1) according to any of the two preceding claims, wherein a tangent (34) adjacent to the further inflection point (46) at the rim flange (4) shows an angle of at least 82° and preferably at least 84° to the horizontal centerline (35).

15. The rim (1) according to any of the preceding claims, wherein an inside surface (44) of the rim flange (4) is inclined to the horizontal centerline (35) at an angle of at least 85° and preferably at least 87°.

## Revendications

1. Jante (1) pour une bicyclette (100) entraînée au moins partiellement par force musculaire, comprenant un corps de jante (2) doté de flancs de jante (3) en vis à vis l'un de l'autre, d'un creux de jante (12) et d'une base de jante (22) au niveau de laquelle les flancs de jante (2) se rencontrent au point le plus intérieur radialement (15), et doté de crochets (4) en vis à vis l'un de l'autre qui s'étendent chacun à partir d'un des flancs de jante (3) jusqu'à un point le plus extérieur radialement (5), de sorte que les crochets de jante (4) forment avec les flancs de jante (3) des parois latérales (20) en vis à vis l'une de l'autre et qui s'étendent du point le plus intérieur radialement (15) jusqu'au point le plus extérieur radialement (5), l'endroit le plus large (25) du corps de la jante (2) se trouvant au-dessous du creux de jante (12) et au-dessus d'une ligne médiane horizontale (35),
**caractérisée en ce que** la largeur (250) à l'endroit le plus large (25) est au moins supérieure d'un quart à une ouverture libre (14) entre les crochets (4), et **en ce que** les parois latérales (20) présentent chacune un tracé de courbure défini (6) avec au moins un point de retournement (16) qui est agencé entre le point le plus extérieur radialement (5) et l'endroit le plus large (25), et situé à l'extérieur du crochet (4), et **en ce qu'**au dit point de retournement (16) s'effectue un passage d'une courbure concave (26) à une courbure convexe (36), et que la courbure convexe (36) se situe entre le point de retournement (16) et l'endroit le plus large (25), et que la courbure concave (26) se situe entre le point de retournement (16) et le point le plus extérieur radialement (5).

2. Jante (1) selon la revendication précédente, les parois latérales (20) présentant, entre le point le plus extérieur radialement (5) et l'endroit le plus large (25), chacune une géométrie de section droite (32) à face extérieure en forme de S.

3. Jante (1) selon l'une quelconque des revendications précédentes, l'endroit le plus large (25) étant plus proche du crochet (4) que de la ligne médiane horizontale (35).

4. Jante (1) selon l'une quelconque des revendications précédentes, la largeur maximale (250) étant au moins 1,4 fois plus importante que l'ouverture libre (14), et ladite ouverture libre (14) étant inférieure à 32 mm et de préférence inférieure à 28 mm, et la largeur maximale (250) étant supérieure d'au moins 8 mm à l'ouverture libre (14).

5. Jante (1) selon l'une quelconque des revendications précédentes, la largeur (250) du corps de jante (2) augmentant aussi le long de la courbure concave (26).

6. Jante (1) selon l'une quelconque des revendications précédentes, au moins 70% de l'augmentation de la largeur (250), qui s'opère au total le long de la courbure concave (26) et de la courbure convexe (36), étant obtenue sur un maximum de 25 % de la hauteur (45) du corps de jante (2) et à l'extérieur du crochet (4).

7. Jante (1) selon l'une quelconque des revendications précédentes, la courbure convexe (36) présentant un rayon minimum qui est inférieur à un rayon minimum de la courbure concave (26), et le rayon minimum de la courbure concave (26) se trouvant sur le crochet (4).

8. Jante (1) selon l'une quelconque des revendications précédentes, la courbure concave (26) étant constituée d'une section de courbure de crochets (261) qui s'étend le long du crochet (4), et d'une section de courbure de flanc de jante (262) qui s'étend le long du flanc de jante (3), et la largeur (250) du corps de jante (2) augmentant au total pour une moindre part le long de la section de courbure de crochets (261) que le long de la section de courbure de flanc de jante (262).

9. Jante (1) selon la revendication précédente, la largeur (250) du corps de jante (2) augmentant une première fois le long de la section de courbure de flanc de jante (262) et de la courbure convexe (36), et la largeur (250) du corps de jante (2) augmentant une deuxième fois le long de la section de courbure de crochet (261), et la première augmentation de largeur étant au moins deux fois supérieure, et de préférence au moins trois fois supérieure à la deuxième augmentation de largeur.

10. Jante (1) selon l'une quelconque des revendications précédentes, l'augmentation totale de la largeur (250) le long de la courbure concave (26) divergeant de 10 % maximum et de préférence de 5 % maximum de l'augmentation totale de largeur (250) le long de la courbure convexe (36).

11. Jante (1) selon l'une quelconque des revendications précédentes, la courbure concave (26) et la courbure convexe (36) présentant chacune un rayon dont la valeur change au fur et à mesure du tracé de courbure (6).

12. Jante (1) selon l'une quelconque des revendications précédentes, un autre point de retournement (46) étant agencé au niveau du crochet (4), et ledit autre point de retournement (46) se situant entre le point de retournement (16) et le point le plus extérieur radialement (5), un passage s'effectuant audit autre point de retournement (26) entre la courbure concave (26) et une autre courbure convexe (56) qui s'étend au moins jusqu'au point le plus extérieur radialement (5), et ledit autre point de retournement (46) se situant au-dessous de l'endroit le plus étroit (24) entre les crochets (4) et/ou ledit autre point de retournement (46) se situant avec une divergence maximum de 8 % à la même hauteur que l'endroit le plus étroit (24) entre les crochets (4).

13. Jante (1) selon la revendication précédente, au moins 70 % de l'augmentation de largeur (250) qui s'effectue au total entre l'autre point de retournement (46) et l'endroit le plus large (25) du corps de jante (2), étant obtenus à l'extérieur du crochet de jante (4), et/ou la largeur (250) du corps de jante (2) diminuant de l'autre point de retournement (46) au point le plus extérieur radialement (5).

14. Jante (1) selon l'une quelconque des deux revendications précédentes, une tangente (34) appliquée sur le crochet de jante (4) au niveau de l'autre point de retournement (46) présentant un angle d'au moins 82° et de préférence au moins 84° avec la ligne médiane horizontale (35).

15. Jante (1) selon l'une quelconque des revendications précédentes, une face intérieure (44) du crochet (4) étant inclinée dans un angle d'au moins 85° et de préférence d'au moins 87° par rapport à la ligne médiane horizontale (35).
